# EUROPÄISCHE PATENTANMELDUNG

(11) **EP 1 637 212 A1**
(43) Veröffentlichungstag der Anmeldung: **22.03.2006**
(21) Anmeldenummer: 05019299.6
(22) Anmeldetag: 06.09.2005
(51) Int. Cl.: B01D 53/94, B01J 23/44, B01J 23/46, F01N 3/28

(54) **Katalysator für 2-Takt-Motoren oder Kleinmotoren**

(30) Priorität: 06.09.2004 DE 102004043421
(71) Anmelder: W.C. Heraeus GmbH, 63450 Hanau (DE)
(72) Erfinder: Endruschat, Uwe Dr., 60487 Frankfurt (DE); Lochmann, Holger Dr., 71334 Waiblingen (DE)
(74) Vertreter: Kühn, Hans-Christian

(57) **Zusammenfassung**

Die Erfindung betrifft einen Katalysator für 2-Takt-Spülvorlagenmotoren oder Motoren mit vergleichbarer Abgaszusammensetzung, aufweisend eine ein oder mehrere Edelmetalle enthaltende aktive Phase auf einem hitzebeständigen Träger, der dadurch gekennzeichnet ist, dass der Anteil einer Sauerstoffspeicherkomponente im Washcoat geringer als 10 Gew-% ist.

## Beschreibung

Die vorliegende Erfindung betrifft Katalysatoren für im fetten Bereich betriebene Motoren, insbesondere 2-Takt-Spülvorlagen-Motoren oder Motoren mit vergleichbarer Abgaszusammensetzung, die einen Spülverlust an Kraftstoff durch Vorlagerung eines Luftpolsters verhindern.

Strukturell besteht ein derartiger Katalysator aus einem Träger und einem Washcoat. Der Träger kann aus handelsüblichen durchströmbaren Tragkörpern bestehen, wie beispielsweise aus keramischem oder metallischem Gewirke oder Wabenkörper. Wabenkörper werden auch als Monolithe bezeichnet, wie beispielsweise in EP 1 181 970 A1 beschrieben. Washcoats weisen Strukturen auf, die der Kontaktierung des Abgases mit dem Katalysator dienlich sind. Washcoats bestehen aus Trägermaterialien, wie z.B. die in EP 1 181 970 A1 aufgeführten keramischen Oxide. Die Trägermaterialien müssen insbesondere bei Kleinmotoren besonders hitzestabil sein.

Diese Trägermaterialien werden als keramische Beschichtung bestehend aus Aluminiumoxid, einer Sauerstoff speichernde Komponente, insbesondere Ceroxid und eine Edelmetall, insbesondere Platingruppenmetalle enthaltende Phase, z.B. auf Wabenkörner aufgebracht.

Übliche Katalysatoren für Verbrennungskraftmaschinen enthalten eine Mischung von Aluminium-, Cer-, Zirkon- und Lanthanoxiden mit Edelmetallen. Ceroxid ist eine Sauerstoff speichernde Verbindung. Anstatt Ceroxid können auch andere Oxide der Lanthanoxide als Sauerstoff speichernde Verbindungen eingesetzt werden, wie z.B. Praseodymoxid oder Neodymoxid.

Zur Reinigung der Abgase von Kraftstoff sparenden Brennkraftmaschinen werden nach EP 0 326 845 Katalysatoren mit verbesserter Mageraktivität bereitgestellt, bei denen neben Ceroxid auf dem Träger zusätzlich Cer in die aktive Phase der Edelmetalle einbezogen wird.

Kleinmotoren werden im fetten Bereich betrieben, so dass im Abgas zum Teil erhebliche Mengen an unverbrannten Kohlenwasserstoffen vorhanden sind. Für Kleinmotoren wird gemäß DE 197 36 628 A1 ein Katalysator aus unedlem Metall zur Reinigung fetter Abgase vorgeschlagen.

Zu dieser Problematik werden Konstruktionen vorgeschlagen, bei denen die Vermeidung einer Überhitzung ein wesentlicher Gesichtspunkt ist, wie beispielsweise gemäß DE 197 24 289 oder DE 197 24 244.

Neuartige 2-Takt-Motoren verhindern gemäß US 6,647,713 den hohen Spülverlust an Kraftstoff durch die Vorlagerung eines Luftpolsters. Das Abgasgemisch dieser Motoren ist noch als Fett zu charakterisieren. Für diese neuen sogenannten 2-Takt-Spülvorlagen-Motoren gibt es noch keine geeigneten Katalysatoren.

Nach DE 101 39 700 werden für solche Motoren konventionelle Katalysatoren eingesetzt. Im Rahmen der vorliegenden Erfindung wurde aber erkannt, dass mit diesen Katalysatoren die Emission von Kohlenwasserstoffen im Hinblick auf die Umweltbelastung und zukünftige Abgasnormen unzureichend reduziert wird. Charakteristisch für diesen Motorentyp ist aber der charakteristisch hohe Ausstoß an unverbrannten Kohlenwasserstoffen, der als Hauptursache für Umweltbelastung gesehen werden kann.

Es ist die Aufgabe der vorliegenden Erfindung wirkungsvolle Katalysatoren für 2-Takt-Motoren bereitzustellen, die einen Spülverlust an Kraftstoff durch Vorlagerung eines Luftpolsters verhindern, insbesondere soll die Emissionsbelastung durch Kohlenwasserstoffe durch den Katalysator wirksam verringert werden.

Zur Lösung der Aufgabe werden Katalysatoren bereitgestellt, bei denen Edelmetalle oder Edelmetallmischungen auf einem hochtemperaturstabilen Träger aufgebracht werden, wobei der Katalysator überraschenderweise keinen Sauerstoffspeicher aufweist. Überraschenderweise führen übliche Sauerstoffspeicher (OSC) wie Ceroxid zu einer Verschlechterung der Katalysatorleistung bei der neuen 2-Takt-Motoren-Generation. Diese Verschlechterung ist bei einem Anteil eines Sauerstoffspeichers von unter 10 Gew-% im Washcoat vernachlässigbar.

Als Washcoat eignet sich hochtemperaturstabiles Aluminiumoxid, wie das handelsübliche Material für übliche Katalysatoren für Verbrennungsmotoren.

Grundsätzlich sind alle Edelmetall enthaltende aktive Phasen auf hochtemperaturstabilen Trägern anwendbar, wenn kein Seltenerdenmetalloxid als Sauerstoffspeicher, insbesondere kein Ceroxid vorliegt. Als aktive Phase eignen sich Edelmetalle und Edelmetalllegierungen. Vorteilhaft erwiesen sich Palladium oder Mischungen von Palladium mit anderen Edelmetallen, insbesondere mit Rhodium. Auch Mischungen der Legierungen in denen Palladium und insbesondere mit Rhodium als wesentlichem Bestandteil enthalten sind, sind als aktive Phase geeignet. Wesentlich sind Bestandteile ab 0,1 Gew-% oder wenigstens 0,1-%igem Oberflächenanteil im Washcoat, insbesondere ab 10 Gew-% oder 10% aktiver Oberfläche. Zirkonsalze verbessern die Wirkung des Katalysators und werden vorzugsweise im Gewichts-Verhältnis 1:2 bis 4:1 zu den Edelmetallen eingesetzt. Zirkonsalze werden im allgemeinen in Zirkonoxide auch als Zirkon bezeichnet, umgewandelt.

Erfindungsgemäße Katalysatoren sind trotz hoher Qualität einfach herstellbar, günstig und vielseitig für 2-Takt-Motoren einsetzbar. Sie weisen eine weitgehend gleichbleibende Aktivität bei unterschiedlichen Abgaszusammensetzungen (Lambda-Variationen) auf. Eine enorm hohe Selektivität der HC-Konvertierung und eine überraschend verringerte Wärmeentwicklung zeichnet die erfindungsgemäßen Katalysatoren gegenüber herkömmlichen Katalysatoren aus.

Die Katalysatoren eignen sich zur Reinigung von Abgas aus 2-Takt-Motoren, insbesondere kleinen 2-Takt-Motoren, wie z.B. Motoren für Kettensägen, Motorsensen, Blasgeräten, Freischneidern, Heckenscheren, etc., die den neuen Generationen von Motoren angehören, deren Spülverlust an Kraftstoff durch Vorlagerung eines Luftpolsters minimiert wird.

Überraschenderweise wurde festgestellt, das die großen Anteile an Ceroxid auf einem Washcoat zur Verschlechterung der Abgasreinigung bei diesen Motoren führen. Die erfindungsgemäße Herstellung von Katalysatoren erfolgt ohne das Aufbringen von Ceroxid auf den Washcoat.

Unterhalb eines Gewichtsanteils von 10% an Ceroxid, insbesondere bei weniger als 3 % verliert die Störung durch Ceroxid an Bedeutung. Bei geringen Mengen an Ceroxid im Bereich von 0,1 % bis 1 % ist die Wirkung des CeO₂ vernachlässigbar gering.

Die erfindungsgemäßen Katalysatoren können analog zu EP 1 181 970 A1 aufgebaut und strukturiert sein, wenn im Unterschied zu EP 1 181 970 A1 der Anteil an sauerstoffspeichernden Komponenten im Washcoat unter 10 Gew-%, vorzugsweise unter 3 Gew-% und insbesondere unter 1 Gew-% beträgt.

In bevorzugten Ausführungen
- ist der Washcoat ein hochtemperaturstabiles dotiertes Aluminiumoxid, insbesondere mit Lanthan, Zirkon oder Barium dotiert;
- weist die aktive Schicht wesentliche Anteile an Palladium oder Palladiummischungen mit anderen Edelmetallen auf, insbesondere mit Rhodium;
- weist die aktive Phase Edelmetallkomponenten und Zirkoniumoxid auf, insbesondere in einem Verhältnis Zirkoniumoxid zu Edelmetallkomponenten von 4:1 bis 1:2.

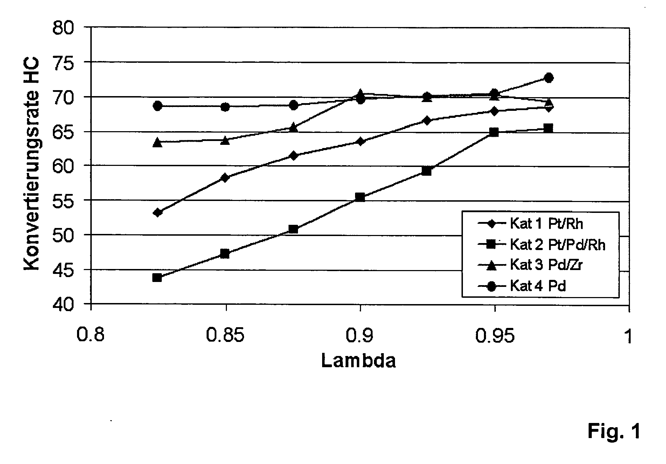

Im folgenden wird die Erfindung mit Bezug auf Figur 1 anhand von Beispielen verdeutlicht.

Figur 1 zeigt Abmagerungskurven eines typischen Spülvorlagenmotors mit unterschiedlichen Katalysatorkonzepten.
Kat 1: Bimetall, Pt + Rh als aktive Bestandteile, Sauerstoffspeicher;
Kat 2: Trimetall, Pt + Pd + Rh als aktive Bestandteile, Sauerstoffspeicher;
Kat 3: Pd, Zr als Dopant, kein Sauerstoffspeicher;
Kat 4: Pd, kein Sauerstoffspeicher.

Je ein Katalysator wird in einen Schalldämpfer eines Komatsu-Zenoah-Motors eingeschweißt und auf einem Abgasmessprüfstand die Konvertierungsrate zu einem gegebenen Lambdawert bestimmt. Als erstes Beispiel wird ein üblicher Bimetallkatalysator mit Platin und Rhodium als aktiven Bestandteilen und einem Sauerstoffspeicher getestet. Im zweiten Beispiel wird ein Trimetallkatalysator mit aktiven Bestandteilen zum weiteren Vergleich getestet. Im dritten Beispiel wird ein erfindungsgemäßer Palladiumkatalysator getestet, der mit Zirkonium dotiert ist. Im vierten Beispiel wird ein erfindungsgemäßer Palladiumkatalysator eingesetzt. Die Messergebnisse sind im Schaubild 1 verdeutlicht.

Eindeutig ist die Konvertierungsrate mit den erfindungsgemäßen Katalysatoren 3 und 4 gegenüber den Vergleichskatalysatoren 1 und 2 erhöht. Dabei ist ersichtlich, dass die Vergleichskatalysatoren 1 und 2 bei fetteren Gemischen ab einem Lambda von ungefähr 0,95 in ihrer Konvertierungsrate stark abfallen, wogegen die Konvertierungsrate von Katalysator 3 nur leicht abfällt und von Katalysator 4 annähernd konstant bleibt. Der Bereich von Lambda >0,8 bis Lambda <0,95 ist der typische Bereich dieser neuen Zweitaktspülvorlagenmotoren. Damit ist gezeigt, dass die Katalysatoren aus dem Stand der Technik für die Verwendung dieser neuen Motoren-generation keine zufriedenstellende Ergebnisse hinsichtlich der Konversionsrate zeigen können und dieses Problem mit den erfindungsgemäßen Katalysatoren gelöst wurde.

### Kat. 1 Vergleich

Ein marktüblicher Katalysator für Kleinmotoren mit Ceroxid als Sauerstoffspeicher und einer Edelmetallbeladung von 50 g/ft³ mit Platin und Rhodium als Aktivkomponenten wird in einen Schalldämpfer für Kleinmotoren eingeschweißt und an einen handelsüblichen Komatsu Zenoah Spülvorlagenmotor mit 25 cc Hubraum angebracht. Der von der Environmental Protaction Agency (EPA) zugelassene Prüfzyklus wurde durchfahren und anschließend wurde die in der Abb. aufgeführte Abmagerungskurve aufgezeichnet. Dazu werden mittels veränderter Vergasereinstellungen bei konstanter Drehzahl unterschiedliche Abgaszusammensetzungen (Lambda-Werte) erzeugt. An jedem dieser Punkte wird der Kohlenwasserstoffgehalt des Abgases vor und nach Katalysator gemessen. Daraus ergibt sich die Konvertierungsrate die in der Abb. gegenüber den Lambdawerten aufgetragen ist.

### Kat. 2 Vergleich

In einem Glaskolben werden 245,6 g eines handelsüblichen, nicht stabilisierten Aluminiumoxids mit einer BET von 150 g/m² in Wasser suspendiert. Anschließend werden 4,4 g einer 5 %igen Edelmetalllösung, bestehend aus Palladium-, Platin- and Rhodiumchlorid zugegeben and an dem Aluminiumoxid adsorbiert. In einem weiteren Glaskolben werden 245,6 eines handelsüblichen Cer/Zirkonmischoxids mit einer BET von 110 m²/g in Wasser suspendiert. Hierzu werden 4,4 g einer 5 %igen Edelmetalllösung, bestehend aus Palladium-, Platin- and Rhodiumchlorid zugegeben and an dem Cer/Zirkonmischoxid adsorbiert. Die so hergestellten Oxidpulver werden getrennt abfiltriert, bei 150°C getrocknet and anschließend bei 500°C an Luft kalziniert. Die so getränkten oxidischen Pulver werden in Wasser and Essigsäure suspendiert and in einer Kugelmühle gemahlen. In die so hergestellte Beschichtungsdispersion werden handelsübliche Metallträger mit 35 mm Matrixdurchmesser and 25 mm Matrixlänge sowie einer Zellenzahl von 300 cpsi getaucht, ausgeblasen and bei 150°C getrocknet, bevor bei 500°C erneut kalziniert wird. Der so hergestellte Katalysator mit einer Edelmetallbeladung von 50 g/ft³ mit Platin, Palladium and Rhodium als Aktivkomponenten wird in einen Schalldämpfer für Kleinmotoren eingeschweißt and an einen handelsüblichen Komatsu Zenoah Spülvorlagenmotor mit 25 cc Hubraum angebracht. Ein von der EPA zugelassener Prüfzyklus wurde durchfahren and anschlie-ßend wurde die im Anhang aufgeführte Abmagerungskurve aufgezeichnet. Dazu werden mittels veränderter Vergasereinstellungen bei konstanter Drehzahl unterschiedliche Abgaszusammensetzungen (Lambda-Werte) erzeugt. An jedem dieser Punkte wird der Kohlenwasserstoffgehalt des Abgases vor and nach Katalysator gemessen. Daraus ergibt sich die Konvertierungsrate, die im Anhang gegenüber den Lambdawerten aufgetragen ist.

### Katalysator 3

In einem Glaskolben werden 491,2 g eines La-stabilisierten Aluminiumoxids mit einer BET von 120 g/m² in Wasser suspendiert. Anschließend werden 8,8 g einer 10% Palladiumchloridlösung zugegeben und an dem Aluminiumoxid adsorbiert. Alle weiteren Schritte werden analog zu Vergleichskat 2 durchgeführt.

### Katalysator 4

Es wird analog zu Kat3 verfahren, allerdings wird der Edelmetalllösung Zirkonnitrat zugegeben, so dass das ein Verhältnis Pd zu Zr von 1:1 entsteht. Alle weiteren Schritte werden analog zu Katalysator 2 durchgeführt.

Das Ergebnis der Motorentests ist in Abbildung 1 zu sehen. Es wurde die HC-Konvertierung der beschriebenen Katalysatoren gegenüber dem Lambda-Wert aufgetragen. Es sind deutliche Unterschiede im Konvertierungsverhalten bei unterschiedlichen Lambda-Werten zu erkennen. Während die HC-Konvertierung der Vergleichsbeispiele (Katalysator 1 und Katalysator 2) bei Lambda-Werten <0,9, also im fetten Bereich deutlich abfallen, zeigen die erfindungsgemäßen Katalysatoren überraschenderweise über den gesamten Lambda-Bereich konstanten HC-Umsatz. Dies ist auf die besondere Zusammensetzung der erfindungsgemäßen Katalysatoren zurückzuführen.

Ausgehend vom den Stand der Technik repräsentierenden Katalysator 1 ist eine Verschlechterung der Konvertierungsrate HC durch die Hinzunahme von Palladium gemäß Katalysator 2 ersichtlich. Dagegen ist die Konvertierungsrate mit den Katalysatoren 3 und 4, die keinen aktiven Sauerstoffspeicher aufweisen, deutlich verbessert.

## Patentansprüche

1. Katalysator für 2-Takt-Spülvorlagenmotoren oder Motoren mit vergleichbarer Abgaszusammensetzung im Bereich 0,8 < λ < 0,95, wobei der Katalysator eine aktive Phase auf einem hitzebeständigen Träger aufweist, die ein oder mehrere Edelmetalle enthält, **dadurch gekennzeichnet, dass** der Anteil einer Sauerstoffspeicherkomponente im Washcoat geringer als 10 Gew-% ist, insbesondere geringer als 3 Gew.-%.

2. Katalysator nach Anspruch 1, **dadurch gekennzeichnet, dass** der Washcoat ein hochtemperaturstabiles dotiertes Aluminiumoxid ist.

3. Katalysator nach Anspruch 1 oder 2, **dadurch gekennzeichnet, dass** die aktive Schicht wesentliche Anteile an Palladium oder Mischungen von Palladium mit anderen Edelmetallen aufweist.

4. Katalysator nach Anspruch 3, **dadurch gekennzeichnet, dass** neben Palladium Rhodium als weiterer wesentlicher Bestandteil der aktiven Phase vorliegt.

5. Katalysator nach einem der Ansprüche 1 bis 4, **dadurch gekennzeichnet, dass** die aktive Phase Edelmetallkomponenten und Zirkoniumoxid aufweist.

6. Katalysator nach Anspruch 5, **dadurch gekennzeichnet, dass** das Gewichts-Verhältnis Zirkoniumoxid zu Edelmetallkomponenten 4:1 bis 1:2 beträgt.

7. Verwendung eines Katalysators zur Reinigung der Abluft von 2-Takt-Spülvorlagenmotoren, **dadurch gekennzeichnet, dass** der Anteil an Sauerstoffspeicherkomponente im Washcoat des Katalysators unter 10 Gew-% beträgt, insbesondere unter 3 Gew-%.

8. Verfahren zur katalytischen Abgasreinigung fetter Abgase im Bereich 0,8 < λ < 0,95 mit einem Abgaskatalysator aus hochtemperaturstabilem Trägermaterial und einer ein oder mehrere Edelmetalle enthaltenden aktiven Phase, **dadurch gekennzeichnet, dass** der Katalysator im Washcoat weniger als 10 Gew-% einer Sauerstoffspeicherkomponente enthält, insbesondere weniger als 3 Gew-%.
